# EUROPÄISCHE PATENTANMELDUNG

(11) **EP 1 316 688 A2**
(43) Veröffentlichungstag der Anmeldung: **04.06.2003**
(21) Anmeldenummer: 02024082.6
(22) Anmeldetag: 29.10.2002
(51) Int. Cl.: F01N 3/20, F01N 3/30

(54) **Reduktionsmitteldosiereinrichtung**

(30) Priorität: 03.12.2001 DE 20119514 U
(71) Anmelder: PUReM Abgassysteme GmbH & Co. KG, 58706 Menden (DE)
(72) Erfinder: Maurer, Bernd, Dr., 58802 Balve (DE); Hüthwohl, Georg, Dr.-Ing., 59494 Soest (DE); Noack, Frank, 58675 Hemer (DE)
(74) Vertreter: Schröter & Haverkamp

(57) **Zusammenfassung**

Eine Reduktionsmitteldosiereinrichtung zum Zuführen eines Reduktionsmittels in den Abgasstrang 8 der Brennkraftmaschine 2 eines Kraftfahrzeuges, umfassend einen Reduktionsmitteltank 3 und eine den Reduktionsmitteltank 3 mit dem Abgasstrang 8 der Brennkraftmaschine 2 verbindende Versorgungsleitung 5, 7 mit einem Dosierventil 6 zum Ausgeben einer bestimmten Reduktionsmittelmenge, ist dadurch bestimmt, dass das Dosierventil 6 mit Abstand zum Abgasstrang 8 in der den Reduktionsmitteltank 3 mit dem Abgasstrang 8 verbindenden Versorgungsleitung 5, 7 angeordnet ist und dass der Ausgang des Dosierventils 6 in eine bei einem Betrieb der Brennkraftmaschine 2 in Richtung zum Abgasstrang 8 Druckluft, bereitgestellt durch die Ladeluft einer Aufladegruppe 10 der Brennkraftmaschine 2, durchströmte Mischkammer 7 zum Vermischen des von dem Dosierventil 6 abgegebenen Reduktionsmittels mit einem Luftstrom mündet.

## Beschreibung

Die Erfindung betrifft eine Reduktionsmitteldosiereinrichtung zum Zuführen eines Reduktionsmittels in den Abgasstrang der Brennkraftmaschine eines Kraftfahrzeuges, umfassend einen Reduktionsmitteltank und eine den Reduktionsmitteltank mit dem Abgasstrang der Brennkraftmaschine verbindende Versorgungsleitung mit einem Dosierventil zum Ausgeben einer bestimmten Reduktionsmittelmenge.

Neben Kohlenmonoxid (CO) und Kohlenwasserstoffen (HC) gehören insbesondere die Stickoxide (NO_{X}) zu den umweltgefährdenden, direkt emittierten Primärschadstoffen, die beim Betrieb von Verbrennungsmotoren, insbesondere Dieselmotoren entstehen. Ein Einsatz von Dreiwegekatalysatoren, wie sie bei Ottomotoren und Gasmotoren verwendet werden, sind aufgrund eines Sauerstoffüberschusses im dieselmotorischen Abgas nicht einsetzbar. Aus diesem Grunde wurden zur Reduktion der Stickoxidemission bei Dieselmotoren selektiv arbeitende SCR-Katalysatoren (Selektive Catalytic Reduction-Katalysator) entwickelt, in dem mit einem zugeführten Reduktionsmittel die ausgestoßenen Stickoxide zu N₂ und H₂O reduziert werden.

Als Reduktionsmittel wird Ammoniak eingesetzt. Das zur Durchführung der Reduktion der Stickoxide benötigte Ammoniak kann in unterschiedlicher Form an Bord des Kraftfahrzeuges mitgeführt werden. Mitgeführt werden kann reines Ammoniak in gasförmiger oder auch in flüssiger Phase. Zur Vermeidung von Handhabungsproblemen des reinen Ammoniaks wird dieses bevorzugt in gebundener Form fahrzeugseitig bevorratet, beispielsweise in einem Tank, wobei das in gebundener Form mitgeführte Ammoniak entweder im Abgasstrang oder zuvor zur Freigabe des gebundenen Ammoniak hydrolytisch aufgespalten wird. Als derartiges Reduktionsmittel wird beispielsweise Harnstoff als wässrige Lösung eingesetzt. Die Harnstofflösung ist in einem Reduktionsmitteltank bevorratet und über eine Versorgungsleitung mit dem Abgasstrang der Brennkraftmaschine verbunden. Ein am Abgasstrang positioniertes Dosierventil dient zum Zuführen der jeweils benötigten Harnstoffmenge, die infolge der im Abgasstrang herrschenden Temperaturen sofort vergast, so dass das zum Durchführen der Stickoxidreduktion benötigte Ammoniak freigesetzt ist. Durch die Anordnung des Dosierventils unmittelbar am Abgasstrang muss dieses gekühlt werden, damit sich die eingangsseitig am Dosierventil anstehende flüssige Harnstofflösung infolge der hohen Temperaturen nicht zersetzt oder der Harnstoff auskristallisiert. Eine solche Reduktionsmitteldosiereinrichtung ist beispielsweise aus DE 198 56 366 C1 bekannt. Entsprechend einer weiteren vorbekannten Ausgestaltung ist das Dosierventil unmittelbar unter dem Reduktionsmitteltank angeordnet, wobei dieses mit dem Abgasstrang über eine sich im Allgemeinen über mehrere Meter erstreckende Zuführleitung verbunden ist. Die Zuführleitung ist Druckluft beaufschlagt, wobei für den Transport der zuzuführenden Harnstofflösungsmenge die von dem Luftverdichter für die Bremsanlage bereitgestellte Druckluft eingesetzt ist. Transportiert wird somit die dosierte Harnstofflösungsmenge in der Versorgungsleitung als Aerosol. Problematisch bei dieser Ausgestaltung ist jedoch, dass die mehrere Meter lange Versorgungsleitung, in der das das Reduktionsmittel enthaltende Aerosol transportiert wird, aufgrund der vom Luftverdichter abzweigbaren Luftmenge nur einen relativ geringen Durchmesser aufweisen kann. Daher besteht bei dieser Ausgestaltung grundsätzlich die Gefahr, dass sich aus dem Aerosol an den Wänden der Versorgungsleitung Reduktionsmittel absetzt, daran auskristallisiert und somit die Durchströmbarkeit beeinträchtigt, wenn nicht gar unterbindet.

Die Verwendung einer wässrigen Harnstofflösung als Reduktionsmittel wird in mehrerlei Hinsicht als zum Einsatz in einem Kraftfahrzeug und zum anschließenden Freisetzen des darin enthaltenen Ammoniaks als Reduktionsmittel angesehen. Nachteilig bei einem Einsatz einer Reduktionsmitteldosiereinrichtung, bei der in den Abgasstrang flüssiges Reduktionsmittel, beispielsweise flüssige wässrige Harnstofflösung zugeführt wird und bei der das Dosierventil - wie in DE 198 56 366 C1 beschrieben - unmittelbar am Abgasstrang positioniert ist, dass die Mündungsöffnung des Dosierventils so ausgerichtet sein muss, dass der jeweils als Dosis abgegebene Reduktionsmittelstrahl parallel zur Strömungsrichtung des Abgases abgegeben werden muss. Auf diese Weise soll verhindert werden, dass der abgegebene Reduktionsmittelstrahl eine der umliegenden Wandungen des Abgasstranges kontaktiert und an diesen Stellen kristallisiert, wodurch der Strömungsquerschnitt des Abgasrohres in diesem Bereich reduziert wird oder sich sogar zusetzen kann. Aus diesem Grunde ist es notwendig, ein solches wie aus DE 198 56 366 C1 beschriebenes Dosierventil in einen Abgasstrangkrümmer einzusetzen. Dies ist nicht immer möglich; insbesondere ist nicht erwünscht, allein zur Positionierung des Dosierventils einen entsprechenden Bogen in den Abgasstrang einzubringen.

Ausgehend von diesem diskutierten Stand der Technik liegt der Erfindung daher die Aufgabe zugrunde, eine eingangs genannte, gattungsgemäße Reduktionsmitteldosiereinrichtung dergestalt weiterzubilden, dass mit dieser eine wirksame Reduktionsmitteldosierung in den Abgasstrang einer Brennkraftmaschine möglich ist, ohne dabei die zuvor aus dem bekannten Stand der Technik aufgezeigten Nachteile in Kauf nehmen zu müssen.

Diese Aufgabe wird erfindungsgemäß dadurch gelöst, dass das Dosierventil mit Abstand zum Abgasstrang in der den Reduktionsmitteltank mit dem Abgasstrang verbindenden Versorgungsleitung angeordnet ist und dass der Ausgang des Dosierventils in eine bei einem Betrieb der Brennkraftmaschine in Richtung zum Abgasstrang Druckluft, bereitgestellt durch die Ladeluft einer Aufladegruppe der Brennkraftmaschine, durchströmte Mischkammer zum Vermischen des von dem Dosierventil abgegebenen Reduktionsmittels mit einem Luftstrom mündet.

Bei der erfindungsgemäßen Reduktionsmitteldosiereinrichtung befindet sich im Gegensatz zum vorbekannten Stand der Technik das Dosierventil nicht unmittelbar am Abgasstrang, sondern mit Abstand zu diesem. Daher braucht das Dosierventil nicht gekühlt zu werden. Das Dosierventil mündet in eine druckluftbeaufschlagte Mischkammer, die ihrerseits in den Abgasstrang mündet, so dass die abgegebene Reduktionsmitteldosis sich in der Mischkammer mit der bereitgestellten Druckluft vermischt und somit als Aerosol anschließend vorliegt. Dieses Aerosol kann unmittelbar in den Abgasstrang eingebracht werden. In diesem Fall ist durch das Zudüsen des Reduktionsmittelaerosols gewährleistet, dass die Gefahr von Reduktionsmittelniederschlägen an den Innenwandungen des Abgasstranges vermieden ist. Folglich kann entsprechend dieser Ausgestaltung die Mischkammer an beliebiger Stelle in den Abgasstrang vor dem SCR-Katalysator münden. Die Bereitstellung eines Aerosols in der Mischkammer hat ferner zum Vorteil, dass dieses aufgrund seiner großen Oberfläche leichter hydrolytisch aufspaltbar ist. Aus diesem Grunde ist in einer Ausgestaltung der Erfindung vorgesehen, die Mischkammer als Mischrohr auszubilden, die an einen Wärmeübertrager angeschlossen ist, der ausgangsseitig wiederum in den Abgasstrang mündet. Der Wärmeübertrager wird erwärmt durch die Wärme des in dem Abgasstrang strömenden Abgases. Da bei einem Betrieb der Brennkraftmaschine die Abgastemperatur ausreichend hoch ist, um beispielsweise als Reduktionsmittel eingesetzte wässrige Harnstofflösung hydrolytisch aufzuspalten, wird diese Reaktion in dem in dem Wärmeübertrager befindlichen Reduktionsmittelaerosol ausgelöst, so dass anschließend das Reduktionsmittel (hier: Ammoniak) gasförmig in den Abgasstrang eingebracht wird. Zu diesem Zweck ist der Wärmeübertrager mittels einer Zuführleitung mit dem Abgasstrang verbunden.

Die Mischkammer ist druckluftbeaufschlagt, wobei die Druckluft durch die Ladeluft einer Aufladegruppe der Brennkraftmaschine, beispielsweise einem Kompressor oder einem Turbolader bereitgestellt ist. Ein Einsatz von Ladeluft als Druckluft als Transportmedium zum Transportieren der dosierten Harnstoffmenge als Aerosol hat zum Vorteil, dass die für den Transport des vom Dosierventil abgegebenen Reduktionsmittels benötigte Luftmenge im Verhältnis zu der beispielsweise von einem Turbolader bereitgestellten Luftmenge nur sehr klein ist und diese Luftabzweigung daher ohne weitere Auswirkung auf den bestimmungsgemäßen Betrieb des Turboladers ist. Insbesondere besteht bei einer Druckluftbeaufschlagung der Mischkammer durch die Ladeluft eines Turboladers die Möglichkeit, die Ladeluft vor oder hinter dem Ladekühler zu entnehmen, so dass Luft unterschiedlicher Temperatur zur Mischung bereit steht. Auf diese Weise ist es möglich, das bereit gestellte Aerosol vorzuwärmen.

Zweckmäßiger Weise ist der Durchmesser der Mischkammer, die beispielsweise als Mischrohr ausgebildet sein kann, größer als der Durchmesser des eingangsseitig am Dosierventil anliegenden Versorgungsleitungsstrangs. Das Dosierventil ist zweckmäßiger Weise in unmittelbarer Nähe zur Brennkraftmaschine angeordnet. Dies hat zum einen den Vorteil, dass das Dosierventil insbesondere bei einem Betrieb der Brennkraftmaschine bei kalten Temperaturen durch die Motorwärme mit erwärmt wird. Zum anderen hat diese Anordnung zum Vorteil, dass das Dosierventil unmittelbar in der Nähe des Ladeluftkühlers angeordnet werden kann, so dass der die Mischkammer beaufschlagende Abzweig lediglich eine kurze Erstreckung aufweist.

In aller Regel befindet sich der Reduktionsmitteltank zum Bevorraten des Reduktionsmittels in unmittelbarer Nähe zum Kraftstofftank. Ferner verfügen moderne Brennkraftmaschinen über eine sich von der Brennkraftmaschine zum Kraftstofftank erstreckende Kraftstoffrücklaufleitung. Bei einer Anordnung des Dosierventils in unmittelbarer Nähe zur Brennkraftmaschine besteht sodann die Möglichkeit, den Versorgungsleitungsstrang, der sich zwischen dem Dosierventil und dem Reduktionsmitteltank erstreckt, zumindest weitestgehend in wärmeleitender Verbindung zu der Kraftstoffrücklaufleitung anzuordnen. Die in der Kraftstoffrücklaufleitung enthaltene Wärme, die bei einem Betrieb der Brennkraftmaschine in aller Regel 60 - 70° C nicht überschreitet, kann zum Erwärmen dieses Versorgungsleitungsstrangs genutzt werden. Daher ist zweckmäßiger Weise der Verlauf der Versorgungsleitung parallel zur Kraftstoffrücklaufleitung angeordnet, wobei beide Leitungen beispielsweise in einem Doppelrohr - als doppelwandiges Rohr mit zwei konzentrisch zueinander angeordneten Kanälen oder auch als parallel zueinander verlaufende Kanäle ausgebildet - vereint sein können. Somit ist der Aufwand zum ausreichenden Erwärmen der Versorgungsleitung auf ein Minimum reduziert. Insbesondere bedarf es keiner zusätzlichen Regelung der Wärme, da die Zersetzungstemperatur des in wässriger Form gegebenenfalls in der Versorgungsleitung transportierten Harnstoffes in keinem Zeitpunkt überschritten ist. Vorteilhaft ist ferner, dass auf diese Weise zudem eine Kühlung des in der Kraftstoffrücklaufleitung zurücktransportierten Kraftstoffes erfolgt, so dass weitere, ggf. vorzunehmende Kühlmaßnahmen zum Kühlen des rücklaufenden Kraftstoffes grundsätzlich nicht notwendig sind. Die benötigte Wärme in der Kraftstoffrücklaufleitung steht bereits nach kürzester Betriebszeit der Brennkraftmaschine zur Verfügung, insbesondere wesentlich früher als ein ggf. durch den Betrieb der Brennkraftmaschine zu erwärmendes Kühlwasser.

Da die Kraftstoffrücklaufleitung sich vom Kraftstofftank bis zur Brennkraftmaschine hin erstreckt, ist es ohne weiteres möglich, im Wesentlichen die gesamte Versorgungsleitung zwischen dem Reduktionsmitteltank und dem Dosierventil, für den Fall, dass dieses im Bereich des Abgasstranges oder der Brennkraftmaschine angeordnet ist, zum Abgeben der gewünschten Harnstoffmenge zu beheizen.

Nachfolgend ist die Erfindung anhand von Ausführungsbeispielen unter Bezugnahme auf die beigefügten Figuren beschrieben. Es zeigen:
- **Fig. 1:**: eine Reduktionsmitteldosiereinrichtung dargestellt nach Art eines Blockdiagrammes gemäß einem ersten Ausführungs-beispiel und
- **Fig. 2:**: eine entsprechende Darstellung einer Reduktionsmitteldosiereinrichtung gemäß einem weiteren Ausführungsbeispiel.

Eine insgesamt mit dem Bezugszeichen 1 gekennzeichnete Reduktionsmitteldosiereinrichtung zum Zuführen von Harnstoff in den Abgasstrang eines Dieselmotors 2 umfasst einen Reduktionsmitteltank 3, der benachbart zum Kraftstofftank 4 , in dem der zum Betreiben der Brennkraftmaschine 2 befindliche Kraftstoff bevorratet ist. Der Reduktionsmitteltank 3 ist über einen Versorgungsleitungsstrang 5 mit einem Dosierventil 6 verbunden. Das Dosierventil 6 ist der Brennkraftmaschine 2, bei der es sich in dem dargestellten Ausführungsbeispiel um einen Dieselmotor handelt, zugeordnet. Ausgangsseitig greift das Dosierventil 6 in eine Druckluft beaufschlagte Mischkammer 7 ein, die in den Abgasstrang 8 der Brennkraftmaschine 2 mündet. Die Mündung der Mischkammer 7 in den Abgasstrang 8 befindet sich vor einem SCR-Katalysator 9. Somit ist bei dem dargestellten Ausführungsbeispiel die dem Reduktionsmitteltank 3 mit dem Abgasstrang 8 verbindende Versorgungsleitung durch den Versorgungsleitungsstrang 5 und die Mischkammer 7 gebildet.

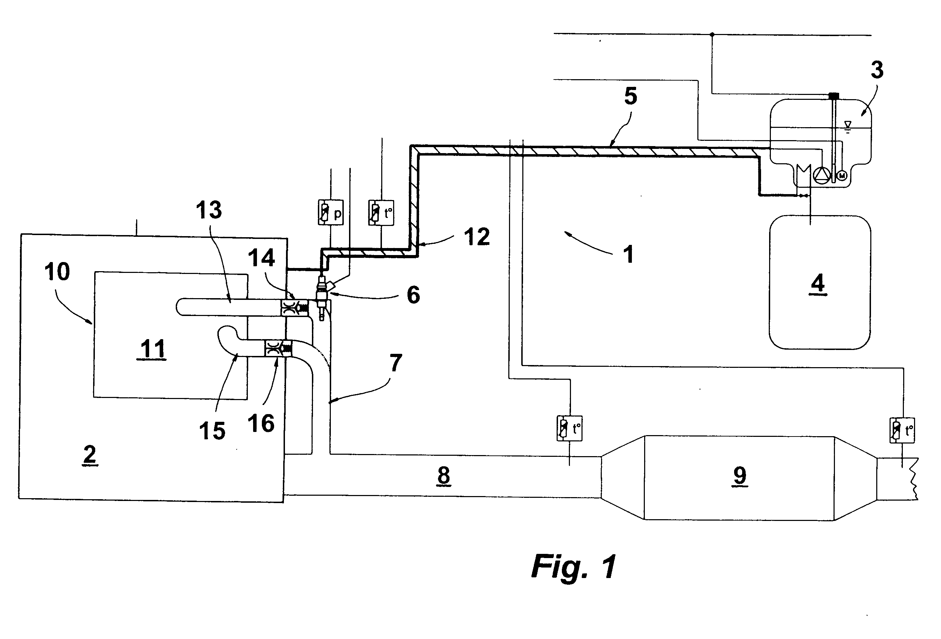

Bei dem dargestellten Ausführungsbeispiel ist die Mischkammer 7 durch die Ladeluft eines der Brennkraftmaschine 2 zugeordneten Turboladers 10 beaufschlagt. Die von dem Dosierventil 6 abgegebene Reduktionsmittelmenge wird daher in der Mischkammer 7 als Aerosol transportiert und als solches in den Abgasstrang 8 eingebracht. Die der Mischkammer 7 zuzuführende Druckluft kann - wie in Figur 1 dargestellt - vor und/oder hinter dem Ladeluftkühler 11 entnommen werden, so dass das in der Mischkammer 7 transportierte Reduktionsmittel als Aerosol entsprechend temperiert ist, bevor dieses in den Abgasstrang 8 eintritt.

Zwischen der Brennkraftmaschine 2 und dem Kraftstofftank 4 ist eine Kraftstoffrücklaufleitung 12 angeordnet. Der in der Kraftstoffrücklaufleitung 12 von der Brennkraftmaschine 2 zu dem Kraftstofftank 4 zurücktransportierte Kraftstoff weist bereits nach kürzester Betriebszeit der Brennkraftmaschine eine Temperatur zwischen 50 und 70 °C auf. In wärmeleitender Verbindung mit der Kraftstoffrücklaufleitung 12 ist der Versorgungsleitungsstrang 5 zum Zuführen des Reduktionsmittels von dem Reduktionsmitteltank 3 zum Dosierventil 6 angeordnet. Der Abschnitt des Versorgungsleitungsstranges 5, der in wärmeleitender Verbindung mit der Kraftstoffrücklaufleitung 12 steht, ist in der Figur schraffiert dargestellt. Aus der Darstellung wird deutlich, dass im Wesentlichen der gesamte Versorgungsleitungsstrang 5 in wärmeleitender Verbindung mit der Kraftstoffrücklaufleitung 12 steht. Die wärmeleitende Verbindung zwischen den beiden Leitungen 5, 12 kann beispielsweise durch ein Doppelrohr mit zwei parallel zueinander verlaufenden Kanälen ausgebildet sein. Die beiden Leitungen sind beispielsweise durch einen Steg miteinander verbunden oder können auch durch eine Fügeverbindung miteinander verbundene einzelne Leitungen realisiert sein.

Das Dosierventil 6 greift mündungsseitig ein in die Mischkammer 7 und ist bezüglich seines Ausganges in die Mischkammer 7 hineinragend angeordnet. Die Mischkammer 7 ist im Durchmesser deutlich größer als der Durchmesser des eingangsseitig am Dosierventil 6 anliegenden Versorgungsleitungsstrangs 5. In die Mischkammer 7 mündet eine erste Ladeluftleitung 13, die die durch den Turbolader 10 bereitgestellte Druckluft hinter dem Ladeluftkühler 11 abgreift. Die Ladeluftleitung 13 ist durch ein Drosselrückschlagventil 14 von der Mischkammer 7 getrennt. In einem eingangsseitig der Mischkammer 7 zugeordneten Krümmungsbereich ist das Dosierventil 6 eingesetzt mit dem Ziel, dass die von dem Dosierventil 6 abgegebene Reduktionsmitteldosis, beispielsweise wässrige Harnstofflösung in Strömungsrichtung der Druckluftbeaufschlagung abgegeben wird. Das Hineinreichen des Dosierventil 6 in die Mischkammer 7 hat zum Vorteil, dass der abgegebene flüssige Reduktionsmittelstrahl sich unmittelbar in dem Ladeluftstrom befindet und somit eine Aerosolbildung begünstigt. In die Mischkammer 7 mündet ferner eine zweite Ladeluftleitung 15, die zum Abgreifen von durch den Turbolader 10 bereitgestellter Ladeluft vor dem Ladeluftkühler 11 dient. Die Ladeluftleitung 15 ist ebenfalls über ein Drosselrückschlagventil 16 gegenüber der eigentlichen Mischkammer 7 abgetrennt. Die beiden Drosseln 14, 16, bei dem dargestellten Ausführungsbeispiel zusätzlich als Rückschlagventil ausgebildet, dienen dem Druckausgleich zur Kompensation des durch den Ladeluftkühler hervorgerufenen Druckverlustes. In einer weiteren, in den Figuren nicht dargestellten Ausgestaltung sind die zuvor beschriebenen Drosselrückschlagventile zusätzlich elektrisch ansteuerbar, um auf diese Weise bestimmten Betriebsbedingungen begegnen zu können.

Der Einsatz der Ladeluft, beispielsweise des Turboladers 10 ist nicht nur deswegen gewünscht, da durch den Luftverdichter eine ausreichende Luftmenge bereitgestellt wird, um auch in der im Durchmesser größeren Mischkammer 7 gegenüber dem Versorgungsleitungsstrang 5 einen ausreichenden Luftstrom zu erzeugen, sondern auch deswegen, da die Luftverdichter mit variabler Schaufelgeometrie ausgebildet sein können. Der Einsatz eines solchen Luftverdichters ermöglicht auch durch unterschiedliche Schaufelstellungen die Bereitstellung der jeweils für den bestimmungsgemäßen Betrieb der Reduktionsmitteldosiereinrichtung 1 benötigten Luftmenge.

Das Abgreifen der Ladeluft auch vor dem Ladeluftkühler 11 hat zum Vorteil, dass auf diesem Wege das in der Mischkammer 7 bereitgestellte Reduktionsmittelaerosol bereits vorgewärmt wird und somit die Temperaturdifferenz zwischen dem Aerosol und dem in dem Abgasstrang 8 strömenden Abgas geringer ist, was eine Hydrolyse des Reduktionsmittels im Abgasstrang 8 begünstigt.

Durch die zurückversetzte Anordnung des Dosierventils 6 gegenüber dem Abgasstrang 8, getrennt durch die Mischkammer 7, bedarf dieses keiner Kühlung, wie dies etwa beim vorbekannten Stand der Technik notwendig ist.

In einer zweckmäßigen Ausgestaltung ist das Dosierventil 6 und die Mischkammer 7 Teil des Saugrohres der Ladegruppe, beispielsweise des Turboladers 10. Eine Reduzierung der zum Durchführen der Erfindung benötigten Teile ist der Vorteil.

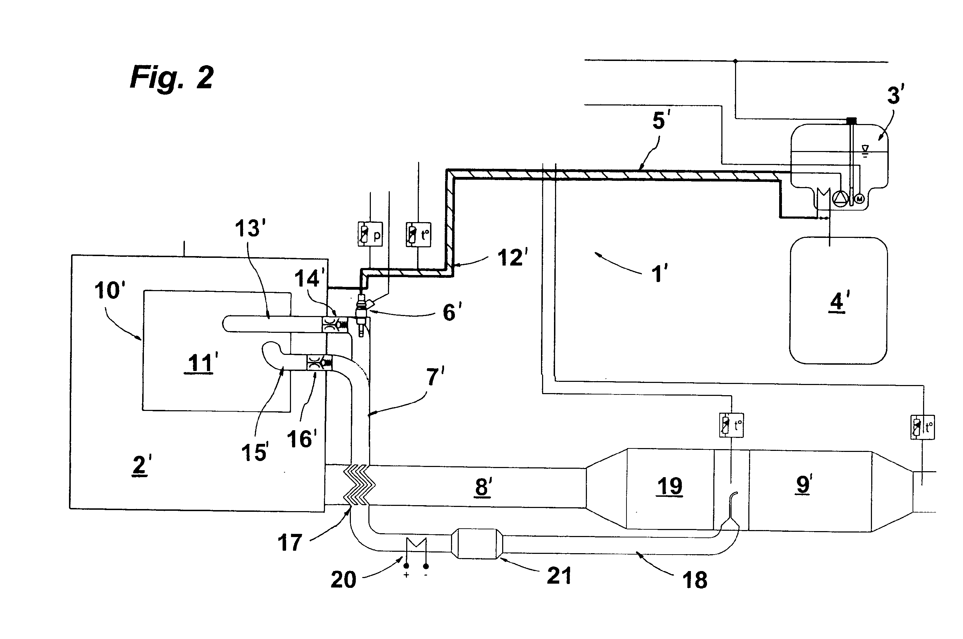

Figur 2 zeigt eine weitere Reduktionsmitteldosiereinrichtung, die prinzipiell aufgebaut ist wie die Reduktionsmitteldosiereinrichtung der Fig. 1. Diese ist in Figur 2 mit dem Bezugszeichen 1' gekennzeichnet. Im übrigen sind gleiche Elemente mit denselben um ein "'" ergänzten Bezugszeichen gekennzeichnet.

Im Unterschied zu der Reduktionsmitteldosiereinrichtung 1 wie in Figur 1 mündet die Mischkammer 7' der Reduktionsmitteldosiereinrichtung 1' der Figur 2 nicht unmittelbar in den Abgasstrang 8', sondern das in der Mischkammer 7' gebildete Aerosol durchströmt zunächst einen Wärmeübertrager 17. Der Wärmeübertrager 17 ist angeordnet im Abgasstrang 8, um auf diese Weise die in dem Abgas des Abgasstrangs 8' enthaltene Abgaswärme auf das Reduktionsmittelaerosol zu übertragen. Da die Abgastemperatur im Betrieb der Brennkraftmaschine in aller Regel höher ist als die Zersetzungstemperatur des Reduktionsmittelaerosols, erfolgt in dem Wärmeübertrager 17 eine hydrolytische Zersetzung des Reduktionsmittelaerosols. Der Wärmeübertrager 17 ist über eine Zuführleitung 18 mit dem Abgasstrang 8' verbunden und mündet in diesen vor dem SCR-Katalysator 9' und hinter einem Oxidationskatalysator 19. Eingesetzt in die Zuführleitung 18 ist ferner ein Heizelement 20 und ein Hydrolysekatalysator 21 zum Begünstigen der hydrolytischen Aufspaltung des eingesetzten Reduktionsmittels bzw. des Reduktionsmittelaerosols. Insbesondere bei einem Kaltstart der Brennstoffmaschine, bei dem die Abgastemperatur noch unterhalb der Zersetzungstemperatur des eingesetzten Aerosols liegt, dient das Heizelement 20 und der dem Heizelement 20 nachgeschaltete Hydrolysekatalysator 21 zur Bereitstellung des gewünschten gasförmigen Reduktionsmittels. In Abhängigkeit vom Betriebszustand und den vorherrschenden Temperaturen, insbesondere im Abgasstrang 8' ist auch ein Mischbetrieb zum hydrolytischen Aufspalten des Reduktionsmittelaerosols möglich.

Die Reduktionsmitteldosiereinrichtungen 1, 1' sind jeweils über ein nicht näher dargestelltes Motormanagementsystem angesteuert, damit entsprechend der jeweiligen Motorensituation die benötige Reduktionsmittelmenge abgegeben bzw. die hydrolytische Aufspaltung gesteuert werden kann.

Bei dem im Rahmen dieser Ausführungen benutzten Begriff Reduktionsmittel sind solche zu verstehen, die entweder das Reduktionsmittel selbst sind oder dieses als Bestandteil enthalten. Dies ist beispielsweise bei Einsatz einer wässrigen Harnstofflösung der Fall, bei der der Ammoniakbestandteil das eigentliche Reduktionsmittel darstellt.

### Bezugszeichenliste

- 1,1': Reduktionsmitteldosiereinrichtung
- 2, 2': Brennkraftmaschine
- 3, 3': Reduktionsmitteltank
- 4, 4': Kraftstoff
- 5, 5': Versorgungsleitungsstrang
- 6, 6': Dosierventil
- 7, 7': Zuführleitung
- 8, 8': Abgasstrang
- 9, 9': SCR-Katalysator
- 10, 10': Turbolader
- 11, 11': Ladeluftkühler
- 12, 12': Kraftstoffrücklaufleitung
- 13: Ladeluftleitung
- 14: Drosselrückschlagventil
- 15: Ladeluftleitung
- 16: Drosselrückschlagventil
- 17: Wärmeübertrager
- 18: Zuführleitung
- 19: Oxidationskatalysator
- 20: Heizelement
- 21: Hydrolysekatalysator

## Patentansprüche

1. Reduktionsmitteldosiereinrichtung zum Zuführen eines Reduktionsmittels in den Abgasstrang (8, 8') der Brennkraftmaschine (2, 2') eines Kraftfahrzeuges, umfassend einen Reduktionsmitteltank (3, 3') und eine den Reduktionsmitteltank (3, 3') mit dem Abgasstrang (8, 8') der Brennkraftmaschine (2, 2') verbindende Versorgungsleitung (5, 7; 5', 7') mit einem Dosierventil (6, 6') zum Ausgeben einer bestimmten Reduktionsmittelmenge, **dadurch gekennzeichnet, dass** das Dosierventil (6, 6') mit Abstand zum Abgasstrang (8, 8') in der den Reduktionsmitteltank (3, 3') mit dem Abgasstrang (8, 8') verbindenden Versorgungsleitung (5, 7; 5', 7') angeordnet ist und dass der Ausgang des Dosierventils (6, 6') in eine bei einem Betrieb der Brennkraftmaschine (2, 2') in Richtung zum Abgasstrang (8, 8') Druckluft, bereitgestellt durch die Ladeluft einer Aufladegruppe (10, 10') der Brennkraftmaschine (2, 2'), durchströmte Mischkammer (7, 7') zum Vermischen des von dem Dosierventil (6, 6') abgegebenen Reduktionsmittels mit einem Luftstrom mündet.

2. Reduktionsmitteldosiereinrichtung nach Anspruch 1, **dadurch gekennzeichnet, dass** der Durchmesser der Mischkammer (7, 7') größer ist als der Durchmesser des eingangsseitig am Dosierventil (6, 6') anliegenden Versorgungsleitungsstrangs (5, 5').

3. Reduktionsmitteldosiereinrichtung nach Anspruch 1 oder 2, **dadurch gekennzeichnet, dass** das Dosierventil (6, 6') in unmittelbarer Nähe zur Brennkraftmaschine (2, 2') angeordnet ist.

4. Reduktionsmitteldosiereinrichtung nach Anspruch 3, **dadurch gekennzeichnet, dass** die Mischkammer (7, 7') von der Ladeluft eines Turboladers (10, 10') beaufschlagt ist und die Mischkammer (7, 7') über eine Druckluftleitung (13) durch die Ladeluft vor dem Ladeluftkühler (11, 11') und über eine weitere Druckluftleitung (15) durch die Ladeluft hinter dem Ladeluftkühler (11, 11') beaufschlagt ist.

5. Reduktionsmitteldosiereinrichtung nach Anspruch 4, **dadurch gekennzeichnet, dass** in die Druckluftleitungen (13, 15) jeweils ein Drosselrückschlagventil (14, 16) angeordnet ist.

6. Reduktionsmitteldosiereinrichtung nach einem der Ansprüche 1 bis 5, **dadurch gekennzeichnet, dass** das Dosierventil (6, 6') mit seinem Ausgang zur Mischkammer (7, 7') dergestalt angeordnet ist, dass die von dem Dosierventil (6, 6') abgegebene Reduktionsmitteldosis in Richtung der Längserstreckung der Mischkammer (7, 7') ausgegeben wird.

7. Reduktionsmitteldosiereinrichtung nach Anspruch 6, **dadurch gekennzeichnet, dass** der Ausgang des Dosierventils (6, 6') in die Mischkammer (7, 7') hineinreichend angeordnet ist.

8. Reduktionsmitteldosiereinrichtung nach einem der Ansprüche 1 bis 7, **dadurch gekennzeichnet, dass** die Mischkammer ein Mischrohr ist.

9. Reduktionsmitteldosiereinrichtung nach Anspruch 8, **dadurch gekennzeichnet, dass** das Mischrohr (7') in einen im Abgasstrang angeordneten Wärmeübertrager (17) mündet, mit dem Wärme aus dem im Abgasstrang (8) strömenden Abgas auf das im Mischrohr (7) bzw. im Wärmeübertrager (17) befindliche Reduktionsmittelaerosol übertragbar ist, welcher Wärmeübertrager (17) ausgangsseitig in eine Zuführleitung (18) zum Transport des erwärmten, ggf. hydrolytisch aufgespaltenen Reduktionsmittels in den Abgasstrang (8) mündet.

10. Reduktionsmitteldosiereinrichtung nach Anspruch 9, **dadurch gekennzeichnet, dass** in die Zuführleitung (18) ein Heizelement (20) zum Beheizen der Zuführleitung (18) eingeschaltet ist.

11. Reduktionsmitteldosiereinrichtung nach einem der Ansprüche 2 bis 10, **dadurch gekennzeichnet, dass** der eingangsseitig am Dosierventil (6, 6') angeschlossene Versorgungsleitungsstrang (5, 5') zu seiner Beheizung in wärmeleitender Verbindung mit einer von der Brennkraftmaschine (2, 2') zu einem Kraftstofftank (4, 4') erstrekkenden Kraftstoffrücklaufleitung (12, 12') stehend angeordnet ist.

12. Reduktionsmitteldosiereinrichtung nach einem der Ansprüche 1 bis 11, **dadurch gekennzeichnet, dass** als Reduktionsmittel eine wässrige Harnstofflösung vorgesehen ist.
